# EUROPÄISCHE PATENTSCHRIFT

(11) **EP 3 255 377 B1**
(45) Veröffentlichungstag und Bekanntmachung des Hinweises auf die Patenterteilung: **20.03.2019**
(21) Anmeldenummer: 16173496.7
(22) Anmeldetag: 08.06.2016
(51) Int. Cl.: G01B 11/24, G01M 5/00, B32B 5/26

(54) **VERFAHREN ZUR SPANNUNGSBERECHNUNG VON BAUTEILEN AUS KOHLEFASERVERSTÄRKTEN KUNSTSTOFFEN**
METHOD FOR STRESS CALCULATION FOR CARBON FIBRE REINFORCED PLASTIC COMPONENTS
PROCEDE DE CALCUL DES TENSIONS DE COMPOSANTS PLASTIQUES RENFORCÉS DE FIBRES DE CARBONE

(43) Veröffentlichungstag der Anmeldung: 13.12.2017
(73) Patentinhaber: Enrichment Technology Company Ltd. Zweigniederlassung Deutschland, 52409 Jülich (DE)
(72) Erfinder: OTREMBA, Frank, 52223 Stolberg (DE); SONNEN, Michael, 47259 Duisburg (DE); BERNER, Matthias, 01157 Dresden (DE); FREUND, Andreas, 01129 Dresden (DE); GÄRTNER, Roland, 01326 Dresden (DE)
(74) Vertreter: FARAGO Patentanwälte

(56) Entgegenhaltungen:
- KASHTALYAN ET AL: "Application of the boundary shape perturbation method to stress analysis of laminated composites with ply waviness", COMPOSITES PART A: APPLIED SCIENCE AND MANUFACTURING, ELSEVIER, AMSTERDAM, NL, Bd. 36, Nr. 2, 1. Februar 2005 (2005-02-01), Seiten 137-143, XP027846635, ISSN: 1359-835X [gefunden am 2005-02-01]
- RANI ELHAJJAR ET AL: "An Infrared Thermoelastic Stress Analysis Investigation for Detecting Fiber Waviness in Composite Structures", POLYMER-PLASTICS TECHNOLOGY AND ENGINEERING, Bd. 53, Nr. 12, 26. August 2014 (2014-08-26), Seiten 1251-1258, XP055320946, US ISSN: 0360-2559, DOI: 10.1080/03602559.2014.886116
- MIZUKAMI KOICHI ET AL: "Detection of in-plane and out-of-plane fiber waviness in unidirectional carbon fiber reinforced composites using eddy current testing", COMPOSITES PART B: ENGINEERING, Bd. 86, 8. Oktober 2015 (2015-10-08), Seiten 84-94, XP029372399, ISSN: 1359-8368, DOI: 10.1016/J.COMPOSITESB.2015.09.041

## Beschreibung

### Gebiet der Erfindung

Die Erfindung bezieht sich auf ein Verfahren zur Spannungsberechnung von CFK-Bauteilen.

### Hintergrund der Erfindung

Kohlefaserverstärkte Kunststoffe (sogenannte CFK-Materialien) bestehen aus Kohlenstofffasern, die in ein Kunststoff-Matrixmaterial eingebettet sind. Bauteile aus solchen Materialen werden vorwiegend in Bereichen verwendet, in denen eine hohe Festigkeit der Bauteile bei gleichzeitiger Gewichtseinsparung gewünscht ist. Solche CFK-Bauteile werden beispielsweise in der Luft- und Raumfahrt, im Fahrzeugbau, als Druckbehälter oder anderen Gebieten wie Schwungräder zur Energiespeicherung verwendet. Betriebsspannungen sind ein wesentlicher Parameter für die jeweilige Anwendung und Auslegung der CFK-Bauteile.

Die auf die Anwendung bezogene Auslegung von CFK-Bauteilen gestaltet sich heute noch schwierig. Bereits bei der statischen Auslegung der Bauteile versagt das Material deutlich vor der im Zugversuch ermittelten Festigkeit. Es wird vermutet, dass unter anderem Fertigungseinflüsse und dadurch erzeugte Fehlstellen bzw. Imperfektionen dafür verantwortlich sind. Diese werden heute nur durch empirisch ermittelte Abminderungsfaktoren grob berücksichtigt. Diese sind aber nur bedingt auf andere Bauteile, Fertigungsverfahren, Fertigungsqualitäten etc übertragbar. Es gibt auch noch keine etablierten Verfahren zur Lebensdauerprognose. Auch die Ergebnisse von Crashberechnungen sind mit hohen Ungenauigkeiten belastet.

Es wäre daher wünschenswert, ein Verfahren zur Spannungsberechnung zur Verfügung zu haben, das diese Fertigungseinflüsse berücksichtigt und somit die Qualität der Spannungsberechnung verbessert. Dies kann dann auch die Basis von verbesserten Lebensdauer- und Crashberechnungen sein.

Der Artikel von M. Kashtalyan, "Application of the boundary shape perturbation method to stress analysis of laminated composites with ply waviness", in Composites Part A 36 (2005), pp.137-143, offenbart ein Verfahren zur analytischen Spannungsberechnungen in einem mit Druck belasteten CFK-Bauteil auf Basis eines 3D elastischen Modells.

### Zusammenfassung der Erfindung

Es ist eine Aufgabe der vorliegenden Erfindung, ein Verfahren zur Spannungsberechnung zur Verfügung zu stellen, das eine bessere Auslegung des Bauteils durch eine zuverlässigere Spannungsberechnung ermöglicht.

Diese Aufgabe wird gelöst gemäß dem unabhängigen Verfahrensanspruch 1 durch ein Verfahren zur Spannungsberechnung von CFK-Bauteilen aus mehreren Lagen an Faserverbundmaterial, die in zumindest einem Teil der jeweiligen Lagen im Wesentlichen eine unidirektionale Ausrichtung besitzen, umfassend die Schritte:
- flächenmäßiges Bestimmen einer Oberflächenkontur des CFK-Bauteils umfassend Höhe und Position von Oberflächenwelligkeiten in der äußeren Lage des Faserverbundmaterials mittels geeigneter optischer Messverfahren;
- Auswählen einer geeigneten Position für mindestens eine Schnittfläche durch die Lagen an Faserverbundmaterial des CFK-Bauteils anhand der bestimmten Höhe und Position der Oberflächenwelligkeiten;
- Analysieren und Bestimmen von charakteristischen Oberflächenwelligkeiten mittels einer zweidimensionalen Fourier-Analyse unter Verwendung geeigneter Filter und einer Auswahl von Fourier-Ordnungen der Oberflächenwelligkeiten, wobei die Filter und Fourier-Ordnungen so gewählt werden, dass eine Rücktransformation der Fourier-Analyse eine hinreichende Reproduktion der optisch bestimmten Oberflächenkontur ermöglicht;
- Bestimmen der Welligkeit des CFK-Bauteils an der Schnittfläche durch das CFK-Bauteil als Funktion der Dicke des CFK-Bauteils unter Berücksichtigung der gemäß vorangegangenem Schritt ausgewählten Fourier-Ordnungen als relevante Fourier-Ordnungen;
- Parametrisieren eines digitalen Modells des gesamten CFK-Bauteils auf Basis der charakteristischen Oberflächenwelligkeit und Welligkeit als Funktion der Dicke des CFK-Bauteils in ein Finite-Elemente-Netz, das für eine Abbildung der bestimmten Oberflächenwelligkeiten und Welligkeiten umfassend alle relevanten Fourier-Ordnungen entsprechend fein gewählt wird; und
- Berechnen von lokalen Spannungen anhand des digitalen Modells mittels Lösung eines durch das Finite-Elemente-Netz definierte Gleichungssystem.

Das flächenmäßige Bestimmen einer Oberflächenkontur des CFK-Bauteils bezeichnet die zweidimensionale Auftragung der Oberflächenkontur eines dreidimensionalen CFK-Bauteils. Beispielsweise erhält man die flächenmäßige Oberflächenkontur eines zylindrischen Bauteils über die Oberflächenkontur der Mantelfläche des Zylinders abgewickelt als eine zweidimensionale Fläche, wobei die eine Mantelkante in der abgewickelten Darstellung an die gegenüberliegende Mantelkante in der abgewickelten Darstellung anschließt, da die Mantelfläche des realen CFK-Bauteils ohne solche Kante umläuft. Bei anderen Bauteilgeometrien kann man die die dreidimensional geformte Oberfläche beispielsweise in zweidimensionale entsprechend verzerrte Flächenabschnitte abrollen. Die Begriffe "Höhe" und "Position" der Oberflächenwelligkeiten bezeichnen die Höhe der Oberflächenkontur aufgrund der Oberflächenwelligkeit relativ zu einer durchschnittlichen nicht gewellten Oberfläche (Idealgeometrie) sowie der dazugehörige Ort auf dem CFK-Bauteil, an dem die Oberflächenwelligkeit zu der dortigen Abweichung von der durchschnittlichen Oberfläche führt. Dementsprechend können die jeweiligen Höhen positive und negative Werte besitzen, wobei positive Werte ein Herausragen aus der durchschnittlichen Oberfläche und die negativen Werte ein Unterschreiten der realen Oberfläche unter die durchschnittliche Oberfläche bedeuten.

Faserverbundmaterialien sind dabei aus mehreren übereinander angeordneten Lagen an Faserverbundmaterial aufgebaut. Die so bestimmte Oberflächenkontur des CFK-Bauteils entspricht daher der Kontur der jeweils äußeren Lage des Faserverbundmaterials. Ein solches Faserverbundmaterial besteht im Allgemeinen aus zwei Hauptkomponenten, hier aus Fasern, eingebettet in einem Matrixmaterial, das den festen Verbund zwischen den Fasern herstellt. Der Faserverbundbereich kann dabei aus einer Faser oder aus mehreren Fasern gewickelt werden, wobei die Faser(n) in Kontakt zueinander eng nebeneinander gewickelt werden. Dadurch entsteht eine Lage an Fasermaterial, auf die die Fasern in weiteren Lagen beispielsweise gewickelt werden, bis der Faserverbundbereich die gewünschte Dicke besitzt. Durch den Verbund erhält das Faserverbundmaterial höherwertige Eigenschaften, wie beispielsweise eine höhere Festigkeit als sie jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern verwendet werden. Als Matrixmaterialien können beispielsweise Duromere, Elastomere, insbesondere Thermoplaste oder keramische Materialien verwendet werden. Die Materialeigenschaften der Fasern und Matrixmaterialien sind dem Fachmann bekannt, so dass der Fachmann eine geeignete Kombination aus Fasern und Matrixmaterialien zur Herstellung eines Faserverbundbereiches des Bauteils für die jeweilige Anwendung auswählen kann.

Geeigneter optische Messverfahren sind alle Messverfahren, die ein flächenmäßiges Detektieren von Entfernungen zwischen Sensor und der lokalen Oberfläche und eine entsprechende Umrechnung in eine Oberflächenkontur ermöglichen. Hierbei kann entweder der Sensor ein flächenmäßiges Messsignal aufnehmen und/oder das Bauteil wird über seiner gesamten Fläche unter dem Sensor hindurchbewegt. Beispielsweis kann mit einem Digitalisierer eine Oberfläche unter Verwendung von Referenzpunkte abgescannt werden, sodass eine Oberfläche eines CFK-Bauteils als eine zweidimensionale Oberflächenkontur vermessen werden kann. Dafür geeignete optische Messverfahren sind beispielsweise das ATOS-Professional System der Firma GOM. Andere alternative Messverfahren wären beispielsweise 3D-Koordinatenmessungen, CT-Vermessungen oder geeignet aufbereitete SLR-Vermessungen von Oberflächen. SLR-Vermessungen bezeichnen dabei ein Verfahren, bei dem mittels einer oder mehrerer Spiegelreflexkameras (SLR) Oberflächen des gleichen Ausschnittes aus unterschiedlichen Richtungen abfotografiert und rekonstruieren werden. Insbesondere ist die SLR-Vermessung zur optischen Erfassung von Querschnitten geeignet.

Das Auswählen einer geeigneten Position für eine Schnittfläche bezeichnet das Auswählen einer Position, an der sich in der Oberflächenkontur große Oberflächenwelligkeiten zeigen. Welligkeiten gehen einher mit Bereichen, in denen auch in der Tiefe mit großen Welligkeiten zu rechnen ist. Bereiche mit großen Oberflächenwelligkeiten bzw. entsprechenden Welligkeiten in der Tiefe sind diese Bereiche, in denen man die führenden Spannungen im CFK-Bauteil bestimmen kann. Vorzugsweise schneiden daher die Schnittflächen den oder die Bereiche des CFK-Bauteils, der oder die in der flächenmäßig bestimmten Oberflächenkontur die maximale Höhe der Oberflächenwelligkeiten zeigen. Hierbei ist es unschädlich, wenn der Bereich der größten Oberflächenwelligkeit nur lokal auf einen kleinen Anteil der Gesamtschnittfläche begrenzt ist. Vorzugsweise schneidet die Schnittfläche in der geeigneten Position zumindest ein Gebiet, in dem die Oberflächenwelligkeiten 90% oder mehr der maximalen Höhe aller Oberflächenwelligkeiten betragen. Um eine zerstörungsfreie Vermessung zu ermöglichen, kann auch eine zum Bauteil gehörige bereits vorhandene Schnitt- oder Randfläche verwendet werden.

Nachdem die flächenmäßige Oberflächenkontur in digitaler Form vorliegt, wird die Oberflächenkontur mittels einer zweidimensionalen Fourier-Analyse in ein Spektrum an Oberflächenwelligkeiten mit unterschiedlichen Wellenlängen (laterale Ausdehnung entlang der Oberfläche) zerlegt. Da die flächenmäßige Bestimmung der Oberflächenkontur einer vollständigen Abwicklung des CFK-Bauteils entspricht, stellt die eine Kante der zweidimensionalen Darstellung einen Umlauf um das CFK-Bauteil dar. Somit entspricht eine Wellenlänge gleich der Umlauflänge einer Wellenlänge im Fourier-Spektrum mit Fourier-Ordnung gleich 1 mit zwei Knotenpunkten dar. Die Knotenpunkte bezeichnen dabei den Durchgang der entsprechenden Oberflächenwelle durch die durchschnittliche Oberfläche eines nicht gewellten Bauteils. Das Fourier-Spektrum umfasst neben der ersten Ordnung beliebig vielen höhere Fourier-Ordnungen (n = 2, 3, 4, ....) mit entsprechend mehr Knotenpunkten während eines Umlaufs entlang der Kante der zweidimensionalen Darstellung der Oberflächenkontur. Die angewendeten Filter ermöglichen z.B. ein Abschneiden von Fourier-Ordnungen, die von Randeffekten in der zweidimensionalen Darstellung der Oberflächenkontur herrühren. In der abgerollten Darstellung eines dreidimensionalen Körpers stellen die Kanten eine real nicht vorhandene Diskontinuität dar, die zur Verbesserung der späteren Spannungsberechnungen entfernt werden müssen. Bei rotationssymmetrischen CFK-Bauteilen trifft dies nur auf die obere und untere Kante des Bauteils zu, die im Sinne der Spannungsberechnung freie Ränder (bei einem offenen Rohr) oder Übergänge (geschlossene Bauteile) darstellen, die achsparallelen Kanten sind im Sinne der Bauteilsymmetrie periodisch und damit kontinuierlich fortsetzbar. Allgemein gilt es den zu vermessenden Ausschnitt so festzulegen, dass relevante Welligkeiten in ausreichendem Maße erfasst werden. Ebenso beschreiben nicht alle im Fourier-Spektrum enthaltenen Fourier-Ordnungen die Oberflächenkontur präzise. Um die geeigneten Filter und abzuschneidenden Fourier-Ordnungen identifizieren zu können, werden nach Filterung und Auswahl bestimmter zu berücksichtigender Fourier-Ordnungen die nicht zu berücksichtigenden Fourier-Ordnungen abgeschnitten und das resultierende Ergebnis der Fourier-Analyse rücktransferiert. Sofern nach der Rücktransformation eine hinreichende Reproduktion der optisch bestimmten Oberflächenkontur erhalten wurde, werden die verwendeten Filter und berücksichtigten Fourier-Ordnungen für die weitere Analyse verwendet. Die berücksichtigten Fourier-Ordnungen werden als relevante Fourier-Ordnungen bezeichnet. Sofern nach der Rücktransformation die Übereinstimmung nicht hinreichend ist, werden die Filter und/oder die zu berücksichtigenden Ordnungen variiert, bis eine hinreichende Übereinstimmung der durch Rücktransformation erhaltenden Oberflächenkontur mit der gemessenen Oberflächenkontur erreicht ist. Hierbei kann die Reproduktion der optisch bestimmten Oberflächenkontur als hinreichend angesehen werden, wenn nach der Rücktransformation eine maximale Höhe der resultierenden Oberflächenwelligkeit weniger als 10% von der mittels der optischen Messverfahren bestimmten maximalen Höhe der Oberflächenwelligkeit abweicht. In einer weiteren Ausführungsform des Verfahrens kann die Reproduktion der optisch bestimmten Oberflächenkontur als hinreichend angesehen werden, wenn nach der Rücktransformation auch ein daraus bestimmter Faserwinkel weniger als 10% von dem realen Faserwinkel im CFK-Bauteil abweicht. Der reale Faserwinkel ist aus dem Herstellungsprozess des CFK-Bauteils bekannt, beispielsweise über den Wickelwinkel der Fasern für das CFK-Bauteil auf einem Wickeldorn. Der Faserwinkel bezeichnet dabei den Winkel zwischen der Längsrichtung der jeweiligen Faser und einer Symmetrieachse des CFK-Bauteils.

Die zu verwendenden Filter und das Abschneiden der Fourier-Ordnungen, die keine relevanten Fourier-Ordnungen darstellen, kann einerseits durch empirisches Vergleichen zwischen Rücktransformation, bestimmter Oberflächenkontur und Anpassen der Filter und abzuschneidenden Ordnungen ermittelt werden. Andererseits kann aus dem physikalischen Verständnis des Wickelprozesses die Auswahl relevanter Ordnungen abgekürzt werden. Das physikalische Verständnis des Wickelprozesses kann dabei Kenntnisse bezüglich der Lagenstruktur der Lagen an Fasermaterial liefern wie beispielsweise das Vorhandensein von Lagen mit einem Faserwinkel in Umfangsrichtung beziehungsweise von Lagen mit einem davon grundsätzlich abweichenden Wickelwinkel (beispielsweise sogenannte Helixlagen mit einem Wickelwinkel kleiner 70 Grad zur Symmetrieachse des CFK-Bauteils; beispielsweise haben zylindrische CFK-Bauteile als Symmetrieachse die Zylinderachse) und/oder Faserabstände zwischen benachbarten Fasern in den jeweiligen Lagen an Fasermaterial und/oder der Geometrie des CFK-Bauteils (beispielsweise eine Ovalität eines zylindrischen CFK-Bauteils) und/oder Welligkeiten des Wickeldorns zur Herstellung des CFK-Bauteils und/oder Wiederholungsmuster mit Faserbreite beziehungsweise der Breite von simultan gewickelten Faserbündeln (der sogenannten Roving-Breite) und/oder Abhängigkeiten der Oberflächenkontur von der Bauteilgeometrie, beispielsweise große oder kleiner Durchmesser zylindrischer CFK-Bauteile.

Das Bestimmen der Welligkeit des CFK-Bauteils an der Schnittfläche durch das CFK-Bauteil als Funktion der Dicke des CFK-Bauteils kann dabei mittels eines geeigneten optischen Messverfahrens durchgeführt werden. Hierbei können beispielsweise Mikroskopie- oder SLR-Vermessungen von Oberflächen durchgeführt werden. Die relevanten Fourier-Ordnungen werden für die Analyse der Welligkeiten an den Schnittflächen als Funktion der Dicke übernommen.

Das Parametrisieren bezeichnet das Darstellen des gesamten CFK-Bauteils als digitales Modell für die Weiterführenden Berechnungen. Hierbei wird das digitale Modell über ein Finite-Elemente-Netz räumlich beschrieben. Die Finite-Elemente-Methode ist ein Verfahren zur numerischen Lösung von gewöhnlichen oder partiellen Differentialgleichungen, die sich aus der Beschreibung von Feldproblemen ergeben. Damit lassen sich Feldgrößen, wie die Verteilung der mechanischen Spannung in Festkörpern, die mit anderen Verfahren nicht oder nur mit sehr großem Aufwand zu bestimmen sind, ermitteln. Der Festkörper, hier das CFK-Bauteil mit beliebiger Form, wird in viele Teilkörper einfacher Form - die "finiten Elemente" - aufgeteilt, deren physikalisches Verhalten aufgrund ihrer einfachen Geometrie mit bekannten Ansatzfunktionen gut berechnet werden kann. Die Ansatzfunktionen enthalten dabei freie Parameter, deren Ermittlung durch Lösung des infolge der Finite-Elemente-Diskretisierung entstehenden Gleichungssystems erfolgt. Die Suche nach der Bewegungsfunktion ist auf diese Weise auf die Suche nach den Werten der Parameter der Ansatzfunktionen zurückgeführt. In dem immer mehr Parameter (z. B. immer mehr, kleinere Elemente im Finite-Elemente-Netz) oder immer höherwertigere Ansatzfunktionen benutzt werden, kann die Genauigkeit der Näherungslösung verbessert werden. In der vorliegenden Erfindung wird das Finite-Elemente-Netz so fein gewählt, dass die realen Welligkeiten / Oberflächenwelligkeiten im Netz abgebildet werden können. Die Größe der finiten Elemente sollte dabei kleiner als ein Viertel der Wellenlänge der höchsten relevanten Ordnungen sein. Das Berechnen der lokalen Spannungen geschieht anhand des digitalen Modells mittels Lösung eines durch das Finite-Elemente-Netz definierten Gleichungssystems. Hierbei liefert das Finite-Elemente-Gleichungssystem ein Verformungsfeld, eine Integration des Verformungsfeldes liefert ein Dehnungsfeld, das über eine Verknüpfung mit Materialbeschreibung das Spannungsfeld liefert.

Das erfindungsgemäße Verfahren zur Spannungsberechnung stellt ein Verfahren zur Verfügung, das eine bessere Auslegung des Bauteils durch eine zuverlässigere Spannungsberechnung infolge der detaillierten Geometriemodellierung ermöglicht. Aus der Spannung folgt die Grenze des statischen Versagens des CFK-Bauteils, das durch die Festigkeit bei der jeweiligen Beanspruchung (Zug, Druck, Schub etc.) bestimmt ist. Daraus kann die Grenze für das dynamische Versagen (unter Ausnutzung eines Satzes von Bezugs-Wöhler-Linien) bestimmt werden und daraus entsprechend die Lebensdauervorhersage unter Berücksichtigung der Anstrengung des Bauteils und dessen Auslastung, was die Auslegung des Bauteils zum Erfüllen seiner technischen Wirkung über die vorgesehene Zeit vorgibt.

In einer Ausführungsform des Verfahrens ist die Schnittfläche senkrecht zur Oberfläche der äußeren Lage des CFK-Bauteils ausgerichtet. Somit werden die Tiefeninformationen nicht von einer lateral variierenden Oberflächenwelligkeit beeinflusst.

In einer Ausführungsform des Verfahrens ist die Schnittfläche senkrecht zur Symmetrieachse des CFK-Bauteils ausgerichtet. Bei zylindrischen CFK-Bauteilen ist die Symmetrieachse die Zylinderachse.

In einer Ausführungsform des Verfahrens umfasst dieses vor der Bestimmung der Welligkeit als Funktion der Dicke an der Schnittfläche den Schritt einer vorangehenden Präparation der Schnittfläche, vorzugsweise mittels Ätzen der Schnittfläche, damit die Welligkeiten nicht durch andere Parameter maskiert oder beeinflusst werden, beispielsweise Schneiderückstände, Verunreinigungen auf der Schnittfläche oder von der Schnittfläche abweichende Faserverbundreste. Die Präparation ermöglicht außerdem das Sichtbarmachen von Lagen des Faserverbundmaterials mit unterschiedlichem Faserwinkel (Wickelwinkel).

In einer weiteren Ausführungsform umfasst das Verfahren vor der Bestimmung der Welligkeit als Funktion der Dicke an der Schnittfläche den Schritt eines vorangehenden Aufbringens von Markern auf die Schnittfläche und anschließendem Abfotografieren der Schnittfläche. Damit lassen sich später Konturlinien und Referenzkoordinaten identifizieren und erleichtern so das Zusammensetzen der Konturlinien. Außerdem ermöglichen die Marker, die jeweils Referenzkoordinatensysteme darstellen, ein Zusammensetzen der Schnittfläche. Eine automatisierte Bilderfassung kann dabei unabhängig von Markern durch eine mechanische Vorrichtung mit Steuereinheit erfolgen. Im Falle von CFK-Bauteilen mit sogenannten Helixlagen als Teil des Faserverbundmaterials lassen sich die Faserbündel in der Helixlage aufgrund ihrer anderen Ausrichtung separieren. Die resultierenden Welligkeiten aus einer Kreuzungspunktarchitektur der Helixlagen sind in den Umfangslagen (Faserlagen mit einem Faserwinkel nahezu senkrecht zur Symmetrieachse des CFK-Bauteils) detektierbar.

In einer Ausführungsform wird die Bestimmung der Welligkeit als Funktion der Dicke an mehreren Schnittflächen durchgeführt. Dadurch wird die Tiefeninformation für das parametrisierte digitale Modell verbessert, da Schwankungen der Welligkeiten in der Tiefe über die verschiedenen Positionen der Schnittflächen mit berücksichtigt werden können. In einer bevorzugten Ausführungsform werden die für die verschiedenen Schnittflächen bestimmten Welligkeiten gemittelt, wodurch eine über das CFK-Bauteil ermittelte durchschnittliche Welligkeit als Funktion der Tiefe bestimmt wird. In einer anderen Ausführungsform wird ein Verlauf der Welligkeiten zwischen den Schnittebenen interpoliert, sodass auch Welligkeitsgradienten in der Tiefe des Faserverbundmaterials entlang des CFK-Bauteils berücksichtigt werden können.

In einer Ausführungsform wird das Parametrisieren durch Rücktransformation der zweidimensionalen Fourier-Analyse mit zusätzlicher Dickeninformation ausgeführt. Es ergeben sich damit präzisere Spannungsberechnungen.

In einer weiteren Ausführungsform des Verfahrens umfasst das Finite-Elemente-Netz neben dem Ergebnis der Rücktransformation eine Knotenmanipulation von Knoten der Oberflächenwelligkeiten. Durch diese Knotenmanipulation werden die Koordinaten der Knoten der Wellenlängen des Fourier-Spektrums an eine Form des realen CFK-Bauteils angepasst, um den Einfluss von Geometrieabweichungen in die Spannungsberechnungen einfließen zu lassen.

In einer weiteren Ausführungsform des Verfahrens wird das digitale Bauteil-Modell in mehrere Sub-Modelle unterteilt, wobei ein erstes Submodell einem Basismodell des CFK-Bauteils unter Berücksichtigung kleinerer Fourier-Ordnungen (entspricht Welligkeiten mit größerer Wellenlänge) aus den relevanten Fourier-Ordnungen entspricht und mindestens ein zweites Submodell einen lokalen Ausschnitt aus dem CFK-Bauteil unter Berücksichtigung höherer Fourier-Ordnung (entspricht Welligkeiten mit größerer Wellenlänge) aus den relevanten Fourier-Ordnungen darstellt. Das Finite-Elemente-Netz für das erste Submodell (Basismodell) ist weniger fein (weniger große Finite-Elemente), da die Wellenlängen hier größer sind, während das Finite-Elemente-Netz für das zweite Submodell sehr fein mit vielen kleinen Finiten Elementen zur Berücksichtigung der hohen Fourier-Ordnungen gestaltet sein muss. Die relevanten kleinen Fourier-Ordnungen, die in dem klein gewählten Ausschnitt des zweiten Sub-Modells nicht mehr sinnvoll abgebildet werden können, sind Bestandteil des ersten Sub-Modells (Basismodell). Durch diese Separation bzw. Aufteilung kann die Rechenzeit für die Spannungsberechnung verkürzt werden. Hier braucht das aufwendige Gleichungssystem unter Berücksichtigung der höheren Fourier-Ordnungen mit einer höheren Anzahl an Finiten Elementen nur für ein begrenztes Volumen des CFK-Bauteils gelöst werden.

In einer weiteren Ausführungsform des Verfahrens gehen in den Schritt des Berechnens von lokalen Spannungen die für eine Anwendung zu erwartende Druck- und Zugbelastungen und Fasereigenschaften pro Element und Lage in das Finite-Elemente-Netz ein.

In einer Ausführungsform des Verfahrens umfasst dieses den zusätzlichen Schritt der Berechnung der Anstrengung des CFK-Bauteils als Funktion der Auslastung des CFK-Bauteils bei unterschiedlichen Betriebsbedingungen aus den berechneten Spannungen. Die Anstrengung ist dabei das Verhältnis zwischen herrschender Spannung zu vom Bauteil zu ertragender Spannung. Bei einer Anstrengung größer 1 kann das Bauteil die Belastung nicht ertragen, bei einer Anstrengung gleich 0 ist das Bauteil unbelastet. Die Auslastung ist die Anstrengung des Bauteils unter Betriebsbedingungen. Die Auslastung kann hierbei nach bekannten Versagensmodellen, beispielsweise nach Cuntze, Puck, Tsai oder Hashin, berechnet werden. In einer weiteren Ausführungsform umfasst das Verfahren den zusätzlichen Schritt der Vorhersage der Betriebslebensdauer des CFK-Bauteils als Funktion der berechneten Anstrengung. Aus der Spannung folgt die Grenze des statischen Versagens des CFK-Bauteils, das durch die Festigkeit bei der jeweiligen Beanspruchung (Zug, Druck, Schub etc.) bestimmt ist. Daraus kann die Grenze für das dynamische Versagen (unter Ausnutzung eines Satzes von Bezugs-Wöhler-Linien) bestimmt werden und daraus entsprechend die Lebensdauervorhersage unter Berücksichtigung der Anstrengung des Bauteils und dessen Auslastung, was die Auslegung des Bauteils zum Erfüllen seiner technischen Wirkung über die vorgesehene Zeit vorgibt.

Neben der Lebensdauerprognose können die Ergebnisse der Spannungsberechnung übrigens auch für verbesserte Crashberechnungen verwendet werden.

In einer Ausführungsform des Verfahrens wird das Verfahren für eine verbesserte Crashberechnung für das CFK-Bauteil und/oder für eine Festlegung von Qualitätskriterien für eine Bauteilprüfung des CFK-Bauteils verwendet. Der Begriff "Crash" bezeichnet das Versagen von rotierenden CFK-Bauteilen im Betrieb, wobei das rotierende CFK-Bauteil seine Rotationsenergie ungewollt in seine Umhüllung abgibt. Die Crashberechnung umfasst eine Vorhersage, wie sich die Energie im CFK-Bauteil und in der Umhüllung verteilt und mit welchem zeitlichen Verlauf die Rotationsenergie freigesetzt wird. Durch die mit dem erfindungsgemäßen Verfahren bestimmten Spannungen können verbessert Vorhersagen gemacht werden, in wieweit das CFK-Bauteil bei einem solchen Crash in Einzelteile zerbricht beziehungsweise ob ein solches Zerbrechen in Abhängigkeit von den Betriebsbedingungen bei den vorliegenden Spannungen überhaupt stattfindet. Aus den Ergebnissen der Spannungsberechnungen können Qualitätskriterien definiert werden, indem CFK-Bauteile bespielweise Oberflächenwelligkeiten und/oder Welligkeiten als Funktion der Dicke nicht oberhalb eines Schwellwertes besitzen dürfen. Diese Schwellwerte können sich beispielsweise aus den Lebensdauervorhersagen oder aus Lebensdauermessungen ergeben. Entsprechend können auch die Ergebnisse der Crashberechnung in eine Bauteilprüfung eingehen.

### Kurze Beschreibung der Abbildungen

Diese und andere Aspekte der Erfindung werden im Detail in den Abbildungen wie folgt gezeigt:
- Fig.1:: eine Ausführungsform des erfindungsgemäßen Verfahrens zur Spannungsberechnung von CFK-Bauteilen;
- Fig.2:: eine weitere Ausführungsform eines Teils des erfindungsgemäßen Verfahrens zur Spannungsberechnung von CFK-Bauteilen;
- Fig.3:: eine weitere Ausführungsform eines weiteren Teils des erfindungsgemäßen Verfahrens zur Spannungsberechnung von CFK-Bauteilen;
- Fig.4:: eine weitere Ausführungsform eines anderen Teils des erfindungsgemäßen Verfahrens zur Spannungsberechnung von CFK-Bauteilen;
- Fig.5:: eine weitere Ausführungsform des erfindungsgemäßen Verfahrens nach Fig.1 mit zusätzlicher Berechnung der Anstrengung und der Vorhersage der Betriebslebensdauer des CFK-Bauteils;
- Fig.6:: (a) CFK-Bauteil und (b) dessen Lagenaufbau des Faserverbundmaterials;
- Fig.7:: Beispiel einer flächenmäßig bestimmten Oberflächenkontur eines CFK-Bauteils;
- Fig.8:: Vergleich zwischen bestimmter Oberflächenkontur gemäß Fig.8 und der Oberflächenkontur nach Rücktransformation unter Verwendung von Filtern und ausgewählten Fourier-Ordnungen;
- Fig.9:: Beispiel einer Welligkeit des CFK-Bauteils gemäß Fig.8 an der Schnittfläche als Funktion der Dicke (D) des CFK-Bauteils;
- Fig.10:: Amplitude relevanter Fourier-Ordnungen als Funktion der Dicke des CFK-Bauteils;
- Fig.11:: Oberflächenkontur nach Rücktransformation der zweidimensionalen Fourier-Analyse mit zusätzlicher Dickeninformation;
- Fig.12:: aus den berechneten Spannungswerten berechnete Gesamtanstrengung des CFK-Bauteils unter Betriebsbedingungen.

### Detaillierte Beschreibung der Ausführungsbeispiele

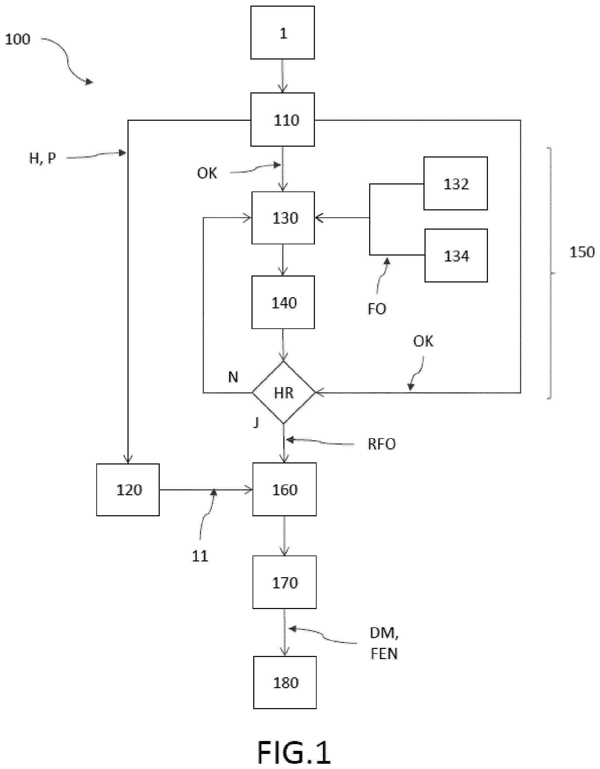

Fig.1 zeigt eine Ausführungsform des erfindungsgemäßen Verfahrens 100 zur Spannungsberechnung von CFK-Bauteilen 1 aus mehreren Lagen L1, L2, L3 an Faserverbundmaterial FVM, die in den jeweiligen Lagen L1, L2, L3 im Wesentlichen eine unidirektionale Ausrichtung besitzen. Das Verfahren 100 umfassend die Schritte des flächenmäßigen Bestimmens 110 einer Oberflächenkontur OK des CFK-Bauteils 1 umfassend Höhe H und Position P von Oberflächenwelligkeiten in der äußeren Lage L1 des Faserverbundmaterials FVM mittels geeigneter optischer Messverfahren; des Auswählens 120 einer geeigneten Position P11 für mindestens eine Schnittfläche 11 durch die Lagen an Faserverbundmaterial des CFK-Bauteils 1 anhand der bestimmten Höhe H und Position P der Oberflächenwelligkeiten; des Analysierens 150 und Bestimmen von charakteristischen Oberflächenwelligkeiten mittels einer zweidimensionalen Fourier-Analyse 130 unter Verwendung geeigneter Filter 132 und einer Auswahl 134 von Fourier-Ordnungen FO der Oberflächenwelligkeiten, wobei die Filter 132 und Fourier-Ordnungen FO so gewählt werden, dass eine Rücktransformation 140 der Fourier-Analyse 130 eine hinreichende Reproduktion HR der optisch bestimmten Oberflächenkontur OK ermöglicht; des Bestimmens 160 der Welligkeit des CFK-Bauteils 1 an der Schnittfläche 11 durch das CFK-Bauteil 1 als Funktion der Dicke D des CFK-Bauteils 1 unter Berücksichtigung der gemäß vorangegangenem Schritt 150 ausgewählten Fourier-Ordnungen FO als relevante Fourier-Ordnungen RFO; des Parametrisierens 170 eines digitalen Modells DM des gesamten CFK-Bauteils 1 auf Basis der charakteristischen Oberflächenwelligkeit und Welligkeit als Funktion der Dicke D des CFK-Bauteils 1 in ein Finite-Elemente-Netz FEN, das für eine Abbildung der bestimmten Oberflächenwelligkeiten und Welligkeiten umfassend alle relevanten Fourier-Ordnungen RFO entsprechend fein gewählt wird; und des Berechnens 180 von lokalen Spannungen anhand des digitalen Modells DM mittels Lösung eines durch das Finite-Elemente-Netz FEN definierte Gleichungssystem. Hierbei schneidet die Schnittfläche 11 in der geeigneten Position P11 vorzugsweise zumindest ein Gebiet, in dem die Oberflächenwelligkeiten 90% oder mehr der maximalen Höhe H aller Oberflächenwelligkeiten betragen. In den Schritt des Berechnens 180 von lokalen Spannungen können die für eine Anwendung zu erwartende Druck- und Zugbelastungen und Fasereigenschaften pro Element und Lage in das Finite-Elemente-Netz FEN eingehen.

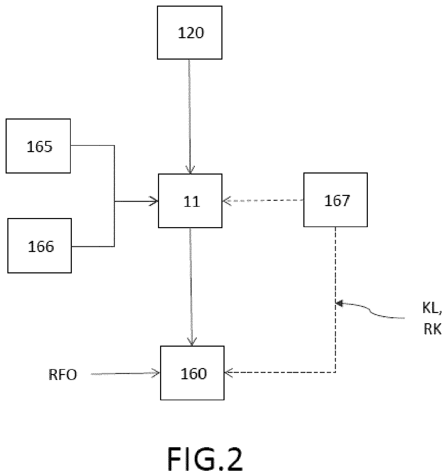

Fig.2 zeigt eine weitere Ausführungsform eines Teils des erfindungsgemäßen Verfahrens 100 zur Spannungsberechnung von CFK-Bauteilen 1, wobei das Verfahren 100 vor der Bestimmung 160 der Welligkeit als Funktion der Dicke D an der Schnittfläche 11 den Schritt einer vorangehenden Präparation 165 der Schnittfläche 11 umfasst, vorzugsweise mittels Ätzen der Schnittfläche 11. In dieser Ausführungsform umfasst das Verfahren 100 vor der Bestimmung 160 der Welligkeit zusätzlich den Schritt eines vorangehende Aufbringens 166 von Markern 14 auf die Schnittfläche 11 und anschließendem Abfotografieren 167 der Schnittfläche 11 zur späteren Identifikation von Konturlinien KL und Referenzkoordinaten RK und zum Zusammensetzen der Konturlinien KL. Aus Gründen der Übersichtlichkeit sind die einzelnen Verfahrensschritte vor Schritt 120 und nach Schritt 160 bzw. zur Bestimmung der relevanten Fourier-Ordnungen RFO hier nicht dargestellt, siehe dazu ergänzend Fig.1.

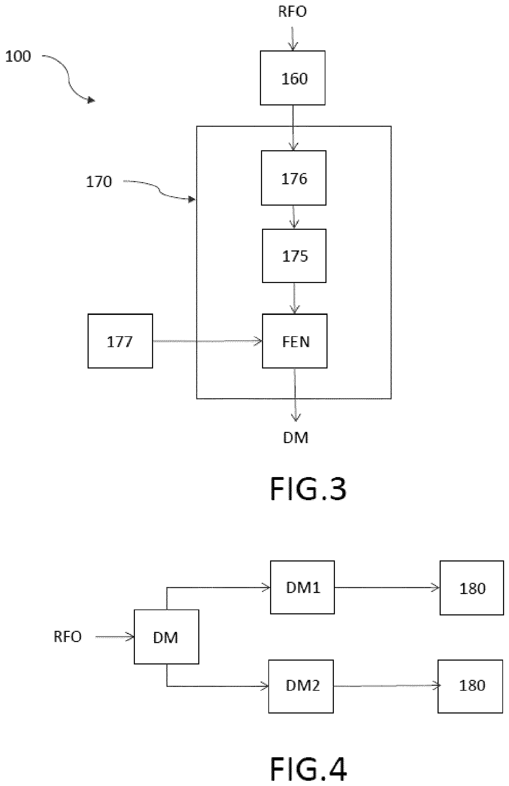

Fig.3 zeigt eine weitere Ausführungsform eines weiteren Teils des erfindungsgemäßen Verfahrens 100 zur Spannungsberechnung von CFK-Bauteilen 1. Aus Gründen der Übersichtlichkeit sind die einzelnen Verfahrensschritte vor Schritt 160 und nach Schritt 170 hier nicht dargestellt, siehe dazu ergänzend Fig.1. Der Schritt des Parametrisierens 170 wird hier durch Rücktransformation 175 der zweidimensionalen Fourier-Analyse 130 mit zusätzlicher Dickeninformation 176 ausgeführt. In dieser Ausführungsform wird in dem Finite-Elemente-Netz FEN neben dem Ergebnis der Rücktransformation 175 eine Knotenmanipulation 177 von Knoten der Oberflächenwelligkeiten ausgeführt, wobei die Koordinaten der Knoten an eine Form des realen CFK-Bauteils 1 angepasst werden.

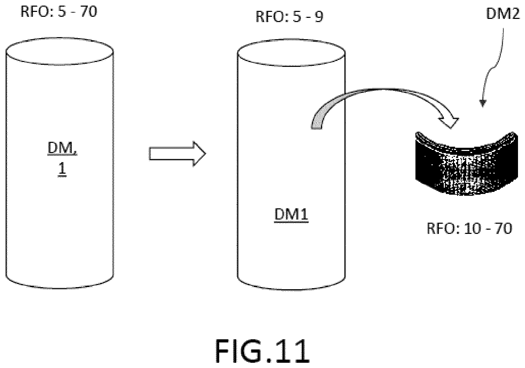

Fig.4 zeigt eine weitere Ausführungsform eines anderen Teils des erfindungsgemäßen Verfahrens 100 zur Spannungsberechnung von CFK-Bauteilen 1. Hier wird das digitale Bauteil-Modell DM nach dem Schritt 170 und vor dem Schritt 180 hier in ein erstes und ein zweites Sub-Modell DM1, DM2 unterteilt, wobei das erste Submodell DM1 einem Basismodell des CFK-Bauteils 1 unter Berücksichtigung kleinerer Fourier-Ordnungen FO1 aus den relevanten Fourier-Ordnungen RFO entspricht und das zweite Submodell DM2 einen lokalen Ausschnitt aus dem CFK-Bauteils 1 unter Berücksichtigung höherer Fourier-Ordnung FO2 aus den relevanten Fourier-Ordnungen RFO darstellt, siehe auch Fig. 11. Mit dem Basismodell wird das CFK-Bauteil 1 nur grob beschrieben, während die feineren Konturen im zweiten Submodell abgebildet sind und nur für dieses berechnet werden müssen.

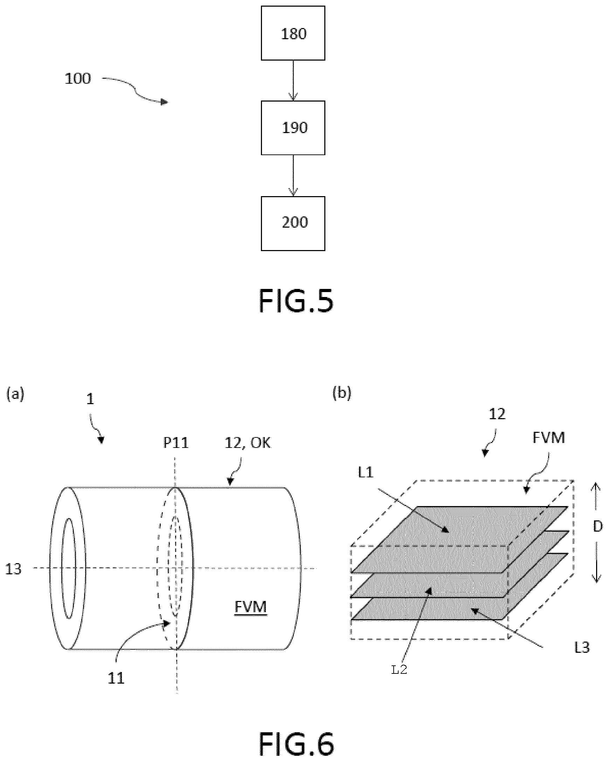

Fig.5 zeigt eine weitere Ausführungsform des erfindungsgemäßen Verfahrens 100 nach Fig.1 mit zusätzlicher Berechnung der Anstrengung 190 und der Vorhersage der Betriebslebensdauer 200 des CFK-Bauteils 1. Aus Gründen der Übersichtlichkeit sind die einzelnen Verfahrensschritte vor Schritt 180 hier nicht dargestellt, siehe dazu ergänzend Fig.1. Der Schritt der Berechnung 190 der Anstrengung des CFK-Bauteils 1 kann als Funktion der Auslastung des CFK-Bauteils 1 bei unterschiedlichen Betriebsbedingungen aus den berechneten Spannungen 180 durchgeführt werden. Das Verfahren umfasst in dieser Ausführungsform auch noch den zusätzlichen Schritt der Vorhersage 200 der Betriebslebensdauer des CFK-Bauteils 1 als Funktion der berechneten Anstrengung.

Fig.6 zeigt beispielhaft (a) ein CFK-Bauteil 1 und (b) dessen Lagenaufbau des Faserverbundmaterials mit mehreren Lagen L1, L2, L3 an Faserverbundmaterial FVM aus Fasern eingebettet in einem Matrixmaterial, wobei die Faser die in den jeweiligen Lagen L1, L2, L3 im Wesentlichen eine unidirektionale Ausrichtung (Ausrichtung mit identischem Faserwinkel) besitzen. Fig.6a zeigt ein zylindrisches CFK-Bauteil 1, beispielsweise einen CFK-Rotor, mit einer Symmetrieachse 13 als Zylinderachse. Bei einem rotierenden Bauteil 1 ist die Symmetrieachse 13 gleich der Rotationsachse. Die Oberfläche 12 besitzt eine Oberflächenkontur OK, die durch die Eigenschaften des Faserverbundmaterials und die Herstellungsbedingungen des CFK-Bauteils 1 verursacht werden. Um die Fourier-Analyse mit Tiefendaten versehen zu können, wird nach der Bestimmung der Oberflächenkontur OK und der entsprechenden Oberflächenwelligkeiten abhängig von der Messposition auf der Oberflächen des CFK-Bauteils 1 eine Schnittfläche 11 mittels Durchschneiden des CFK-Bauteils 1 hergestellt. Die Position P11 der Schnittfläche 11 wird dabei aus den Oberflächenwelligkeiten geeignet gewählt, beispielsweise dort, wo die Oberflächenwelligkeiten maximal sind. Die Schnittfläche 11 steht hier senkrecht zur Oberfläche 12 der äußeren Lage L1 des CFK-Bauteils 1 und ist senkrecht zur Symmetrieachse 13 des CFK-Bauteils 1 ausgerichtet. Bei Bedarf kann die Welligkeit als Funktion der Dicke D an mehreren Schnittflächen 11 bestimmt werden, wobei dann mehrere geeignete Positionen nach den voranstehend genannten Kriterien ausgewählt werden. Die für die verschiedenen Schnittflächen 11 bestimmten Welligkeiten können dabei gemittelt oder ein Verlauf der Welligkeiten zwischen den Schnittebenen 11 für die Weiterverwendung der Ergebnisse interpoliert werden. Fig.6b zeigt das Faserverbundmaterial FVM mit einer Dicke D mit drei Lagen L1, L2, L3 (grau dargestellt) mit Kohlenstofffasern eingebettet in ein Matrixmaterial. In einer Ausführungsform ist das die Kohlenstofffasern abdeckende oder umhüllende Matrixmaterial ein Epoxidharz oder Polyurethanharz.

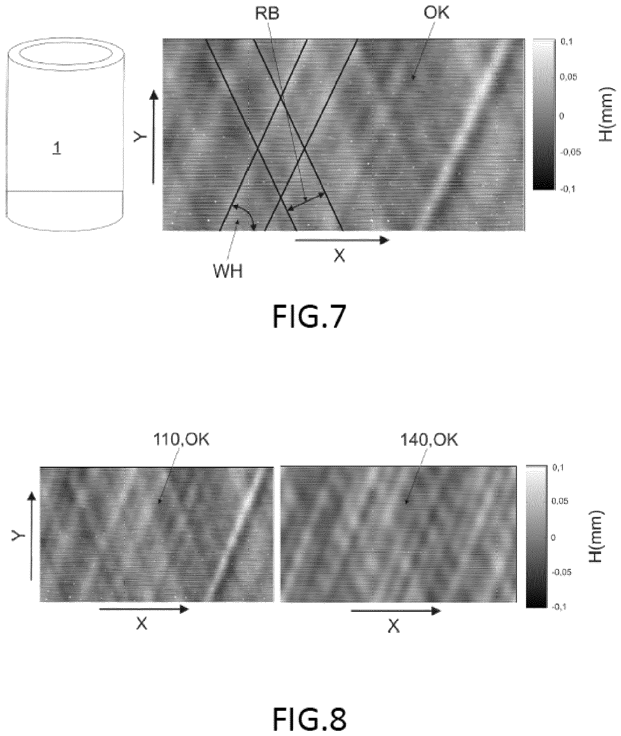

Fig.7 zeigt ein Beispiel einer flächenmäßig bestimmten Oberflächenkontur OK eines CFK-Bauteils 1, hier ein zylindrischer Körper mit einer Zylinderhöhe und einer Wanddicke D. Die flächenmäßige Oberflächenkontur OK in y-Richtung entspricht der Zylinderhöhe und in x-Richtung die Richtung entlang des Umfangs, wobei die x-Koordinate 0 und die maximale hier gezeigte x-Koordinate einem vollen Umfang entsprechen und somit wieder zusammenfallen. Entsprechend der Zylinderform des CFK-Bauteils 1 entspricht hier die x-Koordinate im Ursprung dem 0-Grad Winkel und die maximale x-Koordinate dem 360-Grad Winkel auf dem Umfang des zylinderförmigen CFK-Bauteils 1. Das untersuchte CFK-Bauteil 1 umfasst äußere Umfangslagen an Faserverbundmaterial mit einem Faserwinkel im Wesentlichen entlang des Umfangs des CFK-Bauteils 1 gewickelt sind, hier als waagerechte Konturlinien sichtbar. Das CFH-Bauteil umfasst in tieferen Lagen zusätzlich sogenannte Helixlagen, die in einem bestimmten Wickelwinkel WH (Helixwinkel) deutlich abweichend vom Wickelwinkel der Umfangslagen gewickelt sind. Die Fasern sind in diesem Ausführungsbeispiel nicht als einzelne Fasern, sondern als Faserbündel parallel zueinander gewickelt worden. Die Breite eines solchen Faserbündels wird als sogenannte Rovingbreite RB bezeichnet. Die Rovingbreite RB zeigt sich ebenfalls in sich wiederholenden Konturmustern.

Fig.8 zeigt einen Vergleich zwischen bestimmter Oberflächenkontur OK gemäß Fig.7 und der Oberflächenkontur OK nach Rücktransformation 140 unter Verwendung von Filtern 132 und ausgewählten Fourier-Ordnungen 134, RFO. Hierbei ist die Bedingung, dass die Reproduktion HR der optisch bestimmten Oberflächenkontur OK hinreichend ist, wenn nach der Rücktransformation 140 eine maximale Höhe H der resultierenden Oberflächenwelligkeit weniger als 10% von der mittels der optischen Messverfahren bestimmten maximalen Höhe H der Oberflächenwelligkeit abweicht, erfüllt, siehe Höhenskala der Oberflächenwelligkeit der flächenmäßigen Oberflächenkontur OK. Hier ist ebenso die Bedingung, dass die Reproduktion HR der optisch bestimmten Oberflächenkontur OK hinreichend ist, wenn nach der Rücktransformation 140 auch ein daraus bestimmter Faserwinkel FW weniger als 10% von dem realen Faserwinkel FW im CFK-Bauteil 1 abweicht, erfüllt. Die zweidimensionale Fourier-Analyse benutzt dabei Sinusoide anstelle der Sinusfunktion zur Approximation. Der Sinusoid ist eine sinusförmige Funktion, die aus der Sinusfunktion durch Skalierung von Amplitude und Frequenz sowie Phasenverschiebung gebildet wird und bildet die Grundlage der Darstellung im Frequenzbereich. Zusätzlich Information kann aus dem Sinussoidwinkel gezogen werden, der dem Faserwinkel in realen CFK-Bauteil 1 entsprechen sollte.

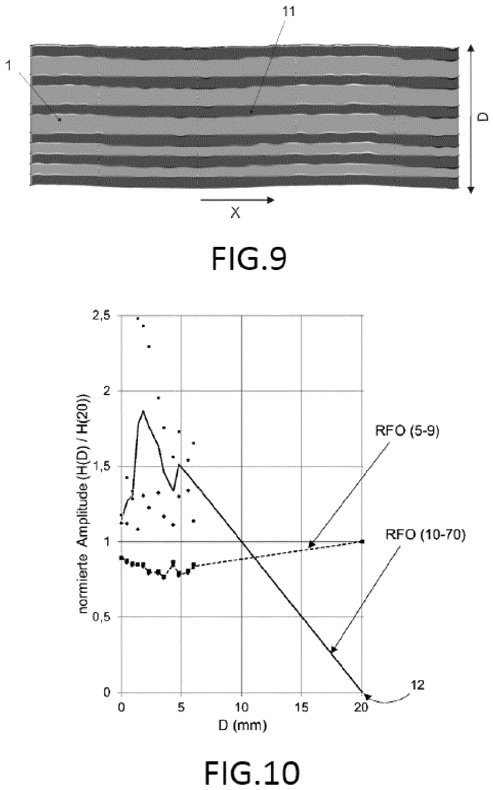

Fig.9 zeigt ein Beispiel einer Welligkeit des CFK-Bauteils gemäß der Farbhöhenskala der Fig.7 + 8 an einer beispielhaften Schnittfläche 11 in verschiedenen Tiefen über die Dicke D eines CFK-Bauteils 1. Die in der äußeren Lage gemessene Oberflächenwelligkeit setzt sich nicht identisch über die Dicke D des CFK-Bauteils 1 nach innen fort, sondern unterliegt ebenfalls eine Schwankung, die für eine präzise Spannungsberechnung mitgenommen werden muss. Die hier dunkel dargestellten Lagenpakete (Schicht aus mehreren einzelnen Lagen) aus Faserverbundmaterial betreffen sogenannte Helixlagen, während die helleren Lagenpakete sogenannten Umfangslagen entsprechen. Die Schnittfläche 11 betrifft hier eine Ausführungsform des CFK-Bauteils, bei dem abwechselnd Helixlagen und Umfangslagen aus Faserverbundmaterial über die Dicke gewickelt wurden. Die Umfangslage umfassen hier Faserverbundmaterial mit einem Faserwinkel im Wesentlichen entlang des Umfangs des CFK-Bauteils 1, das Faserverbundmaterial der Helixlagen ist dagegen in einem bestimmten Wickelwinkel WH (Helixwinkel) abweichend vom Wickelwinkel der Umfangslagen gewickelt.

Fig.10 zeigt beispielhaft den Verlauf der Amplitude der Höhe H (D) als Funktion der Dicke (Tiefe) normiert auf die Höhe H(20) an der Oberfläche 12 der äußeren Lage des Faserverbundmaterials des CFK-Bauteils 1 für zwei unterschiedliche Klassen an relevanten Fourier-Ordnungen RFO für ein beispielhaftes CFK-Bauteil 1. Die Dicke des CFK-Materials beträgt hier 20mm mit der Oberfläche 12 hier bei 20mm. Der Verlauf der gestrichelten Kurve betrifft die Klasse der Fourier-Ordnungen 5 - 9 und die durchgezogene Kurve betrifft die Klasse der Fourier-Ordnungen 10 - 70. Die unterschiedlichen als relevant erachteten Fourier-Ordnungen RFO haben deutlich unterschiedliche Verläufe über die Dicke D der Schnittkante, was einhergeht mit deutlich anderen Welligkeiten und damit Spannungen über die Tiefe. Insofern erhöht die Tiefen- bzw. Dickeninformation (= Welligkeiten als Funktion der Dicke) deutlich die Qualität der Spannungsberechnung, was präzise Lebensdauervorhersagen erst möglich macht. Als nicht relevant sind dagegen die Fourier-Ordnungen 1 - 4 und > 70 erachtet worden.

Fig.11 zeigt die Abbildung des digitalen Modells DM des CFK-Bauteils 1 in zwei Submodelle DM1 und DM2. Der Modellansatz mit einem digitalen Modell DM für das CFK-Bauteil 1 erlaubt die detaillierte Abbildung vermessener Oberflächenwelligkeiten und Welligkeiten über die Dicke des CFK-Bauteils 1 auf Submodelle DM1 und DM2. Hierbei werden die Welligkeiten, die nicht auf das flächenreduzierte zweite Submodell DM2 abgebildet werden können, auf das erste Submodell DM1 abgebildet. Im Falle eines zylindrischen CFK-Bauteils 1 kann das erste Submodell DM1 einem Basismodell für das gesamte CFK-Bauteil 1 entsprechen, wobei nur ein Teil der relevanten Fourier-Ordnungen RFO für das erste Submodell DM1 verwendet wird, wobei diese die nur für das Gesamtmodell anwendbaren relevanten Fourier-Ordnungen RFO mit niedrigeren Ordnungen (beispielsweise < 10) sind. Die höheren relevanten Fourier-Ordnungen RFO (≥ 10) werden auf das zweite Submodell DM2 abgebildet, weil diese auch in kleineren Ausschnitten noch abbildbar sind. Als nicht relevant sind dagegen die Fourier-Ordnungen 1 - 4 und > 70 erachtet worden und werden von keinem der Modelle berücksichtigt. Als kleinerer Abschnitt für das zweite Submodell DM2 kann in diesem Fall ein Mantelsegment des Zylindermantels des zylinderförmigen CFK-Bauteils 1 verwendet werden.

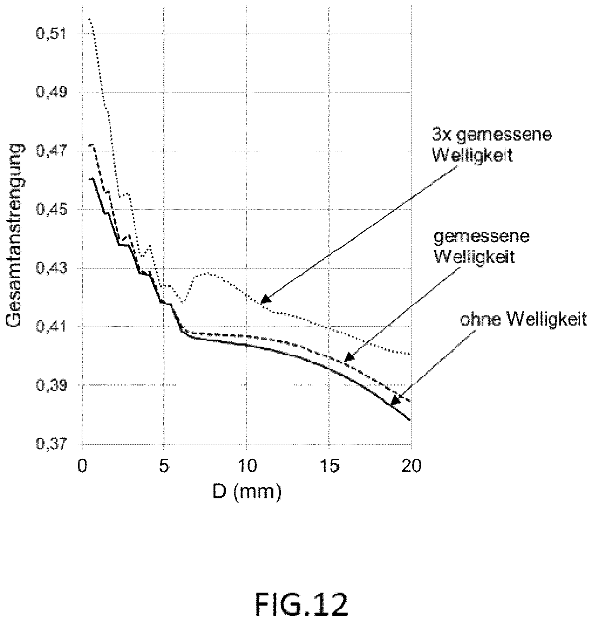

Fig.12 zeigt die berechnete Gesamtanstrengung des CFK-Bauteils resultierend aus den aus den Daten gemäß Fig.8 - 10 berechneten Spannungswerten unter Betriebsbedingungen. Das CFK-Bauteil ist hier der in Figur 11 schematisch dargestellt zylinderförmige Rotor, der um seine Symmetrieachse (Zylinderachse) mit einer Rotationsfrequenz von 750 Hz rotiert und durch diese Rotation aufgrund der auf den Rotormantel wirkenden Fliehkräfte entsprechend belastet wird. Die Wandposition "0mm" entspricht dabei der Innenseite des Rotors und die Wandposition "20mm" der Außenseite der Rotors, was bisher als Oberfläche 12 bezeichnet wurde. Die gestrichelte Kurve ist die berechnete Gesamtanstrengung für den Rotor basierend auf der tatsächlich gemessenen Welligkeit. Als Vergleich ist die Gesamtanstrengung für einen idealen Rotor ohne Welligkeit (durchgezogene Kurve) dargestellt. Der Rotor besitzt zu der Innenseite hin abwechselnd Helixlagen und Umfangslagen mit unterschiedlichen Wickelwinkeln, für Helixlagen der Wickelwinkel gemäß Fig.7 und für Umfangslagen im Wesentlichen in Umfangsrichtung (Wickelwinkel im Bereich von 90 Grad). Ab der Wandposition "7mm" bis zur Oberfläche "20mm" hin sind im Rotor nur Umfangslagen vorhanden. Wie aus Fig.12 ersichtlich ist die Gesamtanstrengung an der Innenseite des Rotors am größten und fällt steil bis zum Übergang auf ausschließlich Umfangslagen ab, wobei sich der Abfall dann nach einem kurzen Plateau weniger steil bis zur äußeren Oberfläche bei D = 20mm fortsetzt. Es zeigt sich, dass die gemessene Welligkeit zu einer Erhöhung der Gesamtanstrengung führt, wobei mit dem erfindungsgemäßen Verfahren die Gesamtanstrengung so genau quantifiziert werden kann, dass eine bessere Auslegung des Bauteils ermöglicht wird. Die gepunktete Kurve zeigt einen Verlauf der Gesamtanstrengung für den Rotor für den Fall, dass er die dreifache Welligkeit besitzen würde.

Die hier gezeigten Ausführungsbeispiele stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: CFK-Bauteil
- 11: Schnittfläche durch das CFK-Bauteil
- 12: Oberfläche der äußeren Lage an Faserverbundmaterial
- 13: Symmetrieachse des CFK-Bauteils

- 100: Verfahren zur Spannungsberechnung von CFK-Bauteilen
- 110: flächenmäßiges Bestimmen einer Oberflächenkontur (OK) des CFK-Bauteils
- 120: Auswählen einer geeigneten Position für mindestens eine Schnittfläche
- 130: zweidimensionale Fourier-Analyse der Oberflächenkontur
- 132: geeigneter Filter bei der Fourier-Analyse
- 134: Auswahl von Fourier-Ordnungen bei der Fourier-Analyse
- 140: Rücktransformation der Fourier-Analyse
- 150: Analysieren und Bestimmen von charakteristischen Oberflächenwelligkeiten mittels der Fourier-Analyse
- 160: Bestimmen der Welligkeit des CFK-Bauteils an der Schnittfläche
- 165: Präparation der Schnittfläche
- 166: Aufbringens von Markern auf die Schnittfläche
- 167: Abfotografieren der Schnittfläche
- 170: Parametrisieren eines digitalen Modells des gesamten CFK-Bauteils
- 175: Rücktransformation der zweidimensionalen Fourier-Analyse in Schritt 170
- 176: zusätzliche Dickeninformation in Schritte 170
- 177: Knotenmanipulation von Knoten der Oberflächenwelligkeiten
- 180: Berechnen von lokalen Spannungen anhand des digitalen Modells
- 190: Berechnung der Anstrengung des CFK-Bauteils
- 200: Vorhersage der Betriebslebensdauer des CFK-Bauteils

- D: Dicke des CFK-Bauteils
- DM: digitales Modell des CFK-Bauteils
- DM1: erstes Submodell des digitalen Modells DM
- DM2: zweites Submodell des digitalen Modells DM
- FEN: Finite-Elemente-Netz
- FO: Fourier-Ordnung
- FVM: Faserverbundmaterial
- H: Höhe der Oberflächenwelligkeit
- P: Position der Oberflächenwelligkeit
- P11: geeignete Position für die Schnittfläche 11
- KL: Konturlinien
- L1-3: Lagen an Faserverbundmaterial im CFK-Bauteil
- OK: Oberflächenkontur
- RB: Rovingbreite von Faserbündeln der Helixlage
- RFO: relevante Fourier-Ordnung
- RK: Referenzkoordinaten
- WH: Wickelwinkel Helixlage

## Patentansprüche

1. Ein Verfahren (100) zur Spannungsberechnung von Bauteilen aus kohlefaserverstärkten Kunststoffen, sogenannten CFK-Bauteilen (1), aus mehreren Lagen (L1, L2, L3) an Faserverbundmaterial (FVM), die in zumindest einem Teil der jeweiligen Lagen (L1, L2, L3) im Wesentlichen eine unidirektionale Ausrichtung besitzen, umfassend die Schritte:
- flächenmäßiges Bestimmen (110) einer Oberflächenkontur (OK) des CFK-Bauteils (1) umfassend Höhe (H) und Position (P) von Oberflächenwelligkeiten in der äußeren Lage (L1) des Faserverbundmaterials (FVM) mittels geeigneter optischer Messverfahren;
- Auswählen (120) einer geeigneten Position (P11) für mindestens eine Schnittfläche (11) durch die Lagen an Faserverbundmaterial des CFK-Bauteils (1) anhand der bestimmten Höhe (H) und Position (P) der Oberflächenwelligkeiten;
- Analysieren (150) und Bestimmen von charakteristischen Oberflächenwelligkeiten mittels einer zweidimensionalen Fourier-Analyse (130) unter Verwendung geeigneter Filter (132) und einer Auswahl (134) von Fourier-Ordnungen (FO) der Oberflächenwelligkeiten, wobei die Filter (132) und Fourier-Ordnungen (FO) so gewählt werden, dass eine Rücktransformation (140) der Fourier-Analyse (130) eine hinreichende Reproduktion (HR) der optisch bestimmten Oberflächenkontur (OK) ermöglicht;
- Bestimmen (160) der Welligkeit des CFK-Bauteils (1) an der hergestellten Schnittfläche (11) durch das CFK-Bauteil (1) als Funktion der Dicke (D) des CFK-Bauteils (1) unter Berücksichtigung der gemäß vorangegangenem Schritt (150) ausgewählten Fourier-Ordnungen (FO) als relevante Fourier-Ordnungen (RFO);
- Parametrisieren (170) eines digitalen Modells (DM) des gesamten CFK-Bauteils (1) auf Basis der charakteristischen Oberflächenwelligkeit und Welligkeit als Funktion der Dicke (D) des CFK-Bauteils (1) in ein Finite-Elemente-Netz (FEN), das für eine Abbildung der bestimmten Oberflächenwelligkeiten und Welligkeiten umfassend alle relevanten Fourier-Ordnungen (RFO) entsprechend fein gewählt wird; und
- Berechnen (180) von lokalen Spannungen anhand des digitalen Modells (DM) mittels Lösung eines durch das Finite-Elemente-Netz (FEN) definierten Gleichungssystems.

2. Das Verfahren (100) nach Anspruch 1, wobei die Schnittfläche (11) in der geeigneten Position (P11) zumindest ein Gebiet schneidet, in dem die Oberflächenwelligkeiten 90% oder mehr der maximalen Höhe (H) aller Oberflächenwelligkeiten betragen.

3. Das Verfahren (100) nach Anspruch 1 oder 2, wobei die Schnittfläche (11) senkrecht zur Oberfläche (12) der äußeren Lage (L1) des CFK-Bauteils (1) ausgerichtet ist, vorzugsweise ist die Schnittfläche (11) senkrecht zur Symmetrieachse (13) des CFK-Bauteils (1) ausgerichtet.

4. Das Verfahren (100) nach einem der voranstehenden Ansprüche, wobei das Verfahren vor der Bestimmung (160) der Welligkeit als Funktion der Dicke (D) an der Schnittfläche (11) den Schritt einer vorangehenden Präparation (165) der Schnittfläche (11) umfasst, vorzugsweise mittels Ätzen der Schnittfläche (11).

5. Das Verfahren (100) nach einem der voranstehenden Ansprüche, wobei das Verfahren vor der Bestimmung (160) der Welligkeit als Funktion der Dicke (D) an der Schnittfläche (11) den Schritt eines vorangehenden Aufbringens (166) von Markern (14) auf die Schnittfläche (11) und anschließendem Abfotografieren (167) der Schnittfläche (11) zur späteren Identifikation von Konturlinien (KL) und Referenzkoordinaten (RK) und zum Zusammensetzen der Konturlinien (KL) umfasst.

6. Das Verfahren (100) nach einem der voranstehenden Ansprüche, wobei die Bestimmung (160) der Welligkeit als Funktion der Dicke (D) an mehreren Schnittflächen (11) durchgeführt wird, vorzugsweise werden die für die verschiedenen Schnittflächen (11) bestimmten Welligkeiten gemittelt oder es wird ein Verlauf der Welligkeiten zwischen den Schnittebenen (11) interpoliert.

7. Das Verfahren (100) nach einem der voranstehenden Ansprüche, wobei die Reproduktion (HR) der optisch bestimmten Oberflächenkontur (OK) hinreichend ist, wenn nach der Rücktransformation (140) eine maximale Höhe (H) der resultierenden Oberflächenwelligkeit weniger als 10% von der mittels der optischen Messverfahren bestimmten maximalen Höhe (H) der Oberflächenwelligkeit abweicht.

8. Das Verfahren (100) nach Anspruch 7, wobei die Reproduktion (HR) der optisch bestimmten Oberflächenkontur (OK) hinreichend ist, wenn nach der Rücktransformation (140) auch ein daraus bestimmter Faserwinkel (FW) weniger als 10% von dem realen Faserwinkel (FW) im CFK-Bauteil (1) abweicht.

9. Das Verfahren (100) nach einem der voranstehenden Ansprüche, wobei das Parametrisieren (170) durch Rücktransformation (175) der zweidimensionalen Fourier-Analyse (130) mit zusätzlicher Dickeninformation (176) ausgeführt wird.

10. Das Verfahren (100) nach Anspruch 9, wobei das Finite-Elemente-Netz neben dem Ergebnis der Rücktransformation (175) eine Knotenmanipulation (177) von Knoten der Oberflächenwelligkeiten umfasst, wobei die Koordinaten der Knoten an eine Form des realen CFK-Bauteils (1) angepasst werden.

11. Das Verfahren (100) nach einem der voranstehenden Ansprüche, wobei das digitale Bauteil-Modell (DM) in mehrere Sub-Modelle (DM1, DM2) unterteilt wird, wobei ein erstes Submodell (DM1) einem Basismodell des CFK-Bauteils (1) unter Berücksichtigung kleinerer Fourier-Ordnungen (FO1) aus den relevanten Fourier-Ordnungen (RFO) entspricht und mindestens ein zweites Submodell (DM2) einen lokalen Ausschnitt aus dem CFK-Bauteils (1) unter Berücksichtigung höherer Fourier-Ordnung (FO2) aus den relevanten Fourier-Ordnungen (RFO) darstellt.

12. Das Verfahren (100) nach einem der voranstehenden Ansprüche, wobei in den Schritt des Berechnens (180) von lokalen Spannungen die für eine Anwendung zu erwartende Druck- und Zugbelastungen und Fasereigenschaften pro Element und Lage in das Finite-Elemente-Netz (FEN) eingehen.

13. Das Verfahren (100) nach einem der voranstehenden Ansprüche, wobei das Verfahren (100) den zusätzlichen Schritt der Berechnung (190) der Anstrengung des CFK-Bauteils (1) als Funktion der Auslastung des CFK-Bauteils (1) bei unterschiedlichen Betriebsbedingungen aus den berechneten Spannungen (180) umfasst.

14. Das Verfahren (100) nach Anspruch 13, wobei das Verfahren den zusätzlichen Schritt der Vorhersage (200) der Betriebslebensdauer des CFK-Bauteils (1) als Funktion der berechneten Anstrengung (190) umfasst.

15. Das Verfahren (100) nach einem der voranstehenden Ansprüche, wobei das Verfahren (100) für eine verbesserte Crashberechnung für das CFK-Bauteil (1) und/oder für eine Festlegung von Qualitätskriterien für eine Bauteilprüfung des CFK-Bauteils (1) verwendet wird.

## Claims

1. A method (100) for stress calculation for components of carbon fiber-reinforced plastics, so-called CFK components (1), of a plurality of layers (L1, L2, L3) of fiber composite material (FVM), which have essentially a unidirectional alignment in at least a part of the respective layers (L1, L2, L3), comprising the steps of:
- aerially determining (110) a surface contour (OK) of the CFK component (1) comprising a height (H) and position (P) of surface waves in the outer layer (L1) of the fiber composite material (FVM) by means of suitable optical measuring methods;
- selecting (120) a suitable position (P11) for at least one sectional area (11) through the layers of fiber composite material of the CFK component (1) by means of the determined height (H) and position (P) of the surface waves;
- analyzing (150) and determining characteristic surface waves by means of a two-dimensional Fourier analysis (130) using suitable filters (132) and a selection (134) of Fourier orders (FO) of the surface waves, wherein the filters (132) and Fourier orders (FO) are selected such that a retransformation (140) of the Fourier analysis (130) provides for a sufficient reproduction (HR) of the optically determined surface contour (OK);
- determining (160) the waves of the CFK component (1) at the produced sectional area (11) by the CFK component (1) as a function of the thickness (D) of the CFK component (1) in consideration of the Fourier orders (FO) selected according to the preceding step (150) as relevant Fourier orders (RFO);
- parameterizing (170) a digital model (DM) of the entire CFK component (1) on the basis of the characteristic surface waves and waves as a function of the thickness (D) of the CFK component (1) into a finite element mesh (FEN), which is selected to be suitably fine for a display of the determined surface waves and waves comprising all relevant Fourier orders (RFO); and
- calculating (180) local stresses by means of the digital model (DM) by means of solving a system of equations, which is defined by the finite element mesh (FEN).

2. The method (100) according to claim 1, wherein the sectional area (11) in the suitable position (P11) intersects at least one region, in which the surface waves are 90% or more of the maximum height (H) of all surface waves.

3. The method (100) according to claim 1 or 2, wherein the sectional area (11) is aligned perpendicularly to the surface (12) of the outer layer (L1) of the CFK component (1), the sectional area (11) is preferably aligned perpendicularly to the axis of symmetry (13) of the CFK component (1).

4. The method (100) according to any one of the preceding claims, wherein, prior to determining (160) the waves as a function of the thickness (D) at the sectional area (11), the method comprises the step of a preceding preparation (165) of the sectional area (11), preferably by means of etching the sectional area (11).

5. The method (100) according to any one of the preceding claims, wherein, prior to determining (160) the waves as a function of the thickness (D) at the sectional area (11), the method comprises the step of a preceding applying (166) of markers (14) to the sectional area (11) and subsequent photographing (167) of the sectional area (11) for the later identification of contour lines (KL) and reference coordinates (RK) and for assembling the contour lines (KL).

6. The method (100) according to any one of the preceding claims, wherein the determining (160) of the waves as a function of the thickness (D) is carried out at a plurality of sectional areas (11), the waves determined for the different sectional areas (11) are preferably averaged or a course of the waves between the sectional planes (11) is interpolated.

7. The method (100) according to any one of the preceding claims, wherein the reproduction (HR) of the optically determined surface contour (OK) is sufficient, when, after the retransformation (140), a maximum height (H) of the resulting surface waves differs by less than 10% from the maximum height (H) of the surface waves determined by means of the optical measuring methods.

8. The method (100) according to claim 7, wherein the reproduction (HR) of the optically determined surface contour (OK) is sufficient, when, after the retransformation (140), a fiber angle (FW) determined therefrom also differs by less than 10% from the real fiber angle (FW) in the CFK component (1).

9. The method (100) according to any one of the preceding claims, wherein the parameterizing (170) is carried out by retransforming (175) the two-dimensional Fourier analysis (130) with additional thickness information (176).

10. The method (100) according to claim 9, wherein, in addition to the result of the retransformation (175), the finite element mesh comprises a node manipulation (177) of nodes of the surface waves, wherein the coordinates of the nodes are adapted to the shape of the real CFK component (1).

11. The method (100) according to any one of the preceding claims, wherein the digital component model (DM) is divided into a plurality of sub-models (DM1, DM2), wherein a first sub-model (DM1) corresponds to a base model of the CFK component (1) in consideration of smaller Fourier orders (F01) from the relevant Fourier orders (RFO) and at least one second sub-model (DM2) represents a local section form the CFK component (1) in consideration of higher Fourier orders (F02) form the relevant Fourier orders (RFO).

12. The method (100) according to any one of the preceding claims, wherein the compressive and tensile stresses and fiber properties per element and layer into the finite element mesh (FEN) expected for an application become part of the step of calculating (180) local stresses.

13. The method (100) according to any one of the preceding claims, wherein the method (100) comprises the additional step of calculating (190) the efforts of the CFK component (1) as a function of the utilization of the CFK component (1) at different operating conditions from the calculated stresses (180).

14. The method (100) according to claim 13, wherein the method comprises the additional step of predicting (200) the operating duration of the CFK component (1) as a function of the calculated effort (190).

15. The method (100) according to any one of the preceding claims, wherein the method (100) is used for an improved crash calculation for the CFK component (1) and/or for a determination of quality criteria for a component testing of the CFK component (1).

## Revendications

1. Procédé (100) pour le calcul de tension de composants en plastiques renforcés de fibres de carbone, ce qu'on appelle des composants PRFC (1), constitués de plusieurs couches (L1, L2, L3) de matériau composite de fibres (FVM) qui possèdent dans au moins une partie des couches respectives (L1, L2, L3) essentiellement une orientation unidirectionnelle, comprenant les étapes de :
- détermination de mesure de surface (110) d'un contour superficiel (OK) du composant PRFC (1) comprenant hauteur (H) et position (P) d'ondulations superficielles dans la couche extérieure (L1) du matériau composite de fibres (FVM) au moyen d'un procédé de mesure optique approprié ;
- sélection (120) d'une position appropriée (P11) pour au moins une interface (11) à travers les couches de matériau composite de fibres du composant PRFC (1) à l'aide des hauteur (H) et position (P) déterminées des ondulations superficielles ;
- analyse (150) et détermination d'ondulations superficielles caractéristiques au moyen d'une analyse de Fourier bidimensionnelle (130) en utilisant des filtres appropriés (132) et une sélection (134) d'ordres de Fourier (FO) des ondulations superficielles, dans lequel les filtres (32) et ordres de Fourier (FO) sont choisis de sorte qu'une transformation inverse (140) de l'analyse de Fourier (130) permet une reproduction suffisante (HR) du contour superficiel déterminé par voie optique (OK) ;
- détermination (160) de l'ondulation du composant PRFC (1) au niveau de l'interface fabriquée (11) à travers le composant PRFC (1) en tant que fonction de l'épaisseur (D) du composant PRFC (1) en tenant compte des ordres de Fourier (FO) sélectionnés selon l'étape précédente en tant qu'ordres de Fourier pertinents (RFO) ;
- paramétrage (170) d'un modèle numérique (DM) de l'ensemble du composant PRFC (1) sur la base de l'ondulation superficielle et de l'ondulation caractéristiques en tant que fonction de l'épaisseur (D) du composant PRFC (1) dans un maillage d'éléments finis (FEN) qui est choisi avec un raffinement correspondant pour une représentation des ondulations superficielles et ondulations déterminées comprenant l'ensemble des ordres de Fourier pertinents (RFO) ; et
- calcul (180) de tensions locales à l'aide du modèle numérique (DM) au moyen de la résolution d'un système d'équations défini par le maillage d'éléments finis (FEN).

2. Procédé (100) selon la revendication 1, dans lequel l'interface (11) dans la position appropriée (P11) coupe au moins une région dans laquelle les ondulations superficielles se montent à 90 % ou plus de la hauteur maximale (H) de l'ensemble des ondulations superficielles.

3. Procédé (100) selon la revendication 1 ou 2, dans lequel l'interface (11) est orientée perpendiculairement à la surface (12) de la couche extérieure (L1) du composant PRFC (1), l'interface (11) est de préférence orientée perpendiculairement à l'axe de symétrie (13) du composant PRFC (1).

4. Procédé (100) selon une des revendications précédentes, dans lequel le procédé comprend avant la détermination (160) de l'ondulation en tant que fonction de l'épaisseur (D) au niveau de l'interface (11) l'étape d'une préparation antérieure (165) de l'interface (11), de préférence au moyen de la gravure de l'interface (11).

5. Procédé (100) selon une des revendications précédentes, dans lequel le procédé comprend avant la détermination (160) de l'ondulation en tant que fonction de l'épaisseur (D) au niveau de l'interface (11) l'étape d'une application antérieure (166) de marqueurs (14) sur l'interface (11) et de photographie subséquente (167) de l'interface (11) pour l'identification ultérieure de lignes de contour (KL) et de coordonnées de référence (RK) et pour la composition des lignes de contour (KL).

6. Procédé (100) selon une des revendications précédentes, dans lequel la détermination (160) de l'ondulation en tant que fonction de l'épaisseur (D) est réalisée au niveau de plusieurs interfaces (11), les ondulations déterminées pour les différentes interfaces (11) sont de préférence moyennées ou une allure des ondulations entre les plans de coupe (11) est interpolée.

7. Procédé (100) selon une des revendications précédentes, dans lequel la reproduction (HR) du contour superficiel déterminé par voie optique (OK) est suffisante lorsqu'une hauteur maximale (H) de l'ondulation superficielle résultante dévie après la transformation inverse (140) de moins de 10 % de la hauteur maximale (H) de l'ondulation superficielle déterminée au moyen du procédé de mesure optique.

8. Procédé (100) selon la revendication 7, dans lequel la reproduction (HR) du contour superficiel déterminé par voie optique (OK) est suffisante lorsqu'un angle de fibres (FW) déterminé à partir de la transformation inverse (140) dévie également après celle-ci de moins de 10 % de l'angle de fibres réel (FW) dans le composant PRFC (1).

9. Procédé (100) selon une des revendications précédentes, dans lequel le paramétrage (170) par la transformation inverse (175) de l'analyse de Fourier bidimensionnelle (130) est réalisé avec une information d'épaisseur supplémentaire (176).

10. Procédé (100) selon la revendication 9, dans lequel le maillage d'éléments finis comprend outre le résultat de la transformation inverse (175) une manipulation de noeuds (177) de noeuds des ondulations superficielles, dans lequel les coordonnées des noeuds sont adaptées à une forme du composant PRFC réel (1).

11. Procédé (100) selon une des revendications précédentes, dans lequel le modèle de composant numérique (DM) est divisé en plusieurs sous-modèles (DM1, DM2), dans lequel un premier sous-modèle (DM1) correspond à un modèle de base du composant PRFC (1) en tenant compte d'ordres de Fourier inférieurs (F01) provenant des ordres de Fourier pertinents (RFO) et au moins un second sous-modèle (DM2) représente une découpe locale du composant PRFC (1) en tenant compte d'ordres de Fourier supérieurs (F02) provenant des ordres de Fourier pertinents (RFO).

12. Procédé (100) selon une des revendications précédentes, dans lequel les sollicitations en pression et traction et propriétés de fibres à attendre pour une application par élément et couche interviennent dans le maillage d'éléments finis (FEN) dans l'étape du calcul (180) de tensions locales.

13. Procédé (100) selon une des revendications précédentes, dans lequel le procédé (100) comprend l'étape supplémentaire du calcul (190) de la contrainte du composant PRFC (1) en tant que fonction de la sollicitation du composant PRFC (1) dans différentes conditions de fonctionnement à partir des tensions calculées (180).

14. Procédé (100) selon la revendication 13, dans lequel le procédé comprend l'étape supplémentaire de la prédiction (200) de la durée de vie de fonctionnement du composant PRFC (1) en tant que fonction de la contrainte calculée (190).

15. Procédé (100) selon une des revendications précédentes, dans lequel le procédé (100) est utilisé pour un calcul de choc amélioré pour le composant PRFC (1) et/ou pour une définition de critères de qualité pour un contrôle de composant du composant PRFC (1).
